# EUROPÄISCHE PATENTSCHRIFT

(11) **EP 1 754 567 B1**
(45) Veröffentlichungstag und Bekanntmachung des Hinweises auf die Patenterteilung: **07.05.2008**
(21) Anmeldenummer: 05018050.4
(22) Anmeldetag: 19.08.2005
(51) Int. Cl.: B23Q 11/08

(54) **Werkzeugmaschine mit Faltenbalgabdeckung**
Machine tool with a bellow covering
Machine outil couverte avec un soufflet

(43) Veröffentlichungstag der Anmeldung: 21.02.2007
(73) Patentinhaber: Mikron Agie Charmilles AG, 2560 Nidau (CH)
(72) Erfinder: Condrau, Alexandre, 2710 Tavannes (CH); Weder, Lukas, 2563 Ipsach (CH)
(74) Vertreter: Weiss, Wolfgang

(56) Entgegenhaltungen:
- EP-A- 1 146 994
- DE-A1- 3 411 394
- DE-A1- 3 613 520

## Beschreibung

Die Erfindung betrifft eine Werkzeugmaschine nach dem Oberbegriff von Anspruch 1.

Eine Werkzeugmaschine mit Faltenbalg ist aus der EP 1 146 994 B1 bekannt. Die Werkzeugmaschine umfasst einen durch Wände sowie eine Dachabdeckung abgeschlossenen Arbeitsraum, in dem eine Vorrichtung zur Aufnahme eines Werkstückes sowie ein Spindelstock mit einer Hauptspindel angeordnet sind, in die Werkzeuge zur Bearbeitung des Werkstückes einspannbar sind. Vorrichtung und Spindelstock sind relativ zueinander verfahrbar. In einer vorderen Wand ist eine durch eine Tür verschliessbare Öffnung vorgesehen, die in den Arbeitsraum führt. Zumindest ein Teil der Dachabdeckung ist zwischen zwei Stellungen derart verfahrbar, dass er in einer ersten Stellung den Arbeitsraum nach oben abschliesst und in einer zweiten Stellung zum Beladen nach oben freigibt.

Die Aufgabe der vorliegenden Erfindung liegt insbesondere darin, eine Dachabdeckung einer Werkzeugmaschine vorzuschlagen, die ohne separatem Antrieb in einfacher und schneller Weise betätigbar ist, die bei Öffnung des Daches der Maschine einen möglichst grossen Freiraum zur Be- und Entladung von Werkzeugen und/oder Werkstücken liefert und die bei geschlossenem Dach der Werkzeugmaschine im Betrieb der Werkzeugmaschine den erforderlichen Abschluss nach aussen liefert.

Erfindungsgemäss wird die Aufgabe durch das Kennzeichen von Anspruch 1 gelöst.

Dies hat zum Vorteil, dass für die Betätigung des Faltenbalgs kein spezieller Antrieb benötigt wird. Der Faltenbalg wird mittels der Schlittenbewegung mitgenommen entfaltet oder zusammengefaltet.

In vorteilhafter Weise ist der Faltenbalg lösbar mit der Längsseite zum Schlitten und/oder zur Kabine verbindbar. Je nach Anforderung kann der Faltenbalg mit der Längsseite zum Schlitten und/oder zur Kabine verbunden werden, um den Faltenbalg zu entfalten, zusammenzurücken oder zu transportieren.

Um den Faltenbalg verschiebbar zu transportieren sind bevorzugt an den Seitenwänden und am Faltenbalg zusammenwirkende Führungselementen vorgesehen.

Gemäss einer weiteren bevorzugten Ausführungsform weist der Faltenbalg und/oder der Schlitten und/oder zur Längsseite der Kabine zusammenwirkende Verbindungsmittel, beispielsweise elektromagnetische oder mechanische Mittel, auf.

Die Verbindungsmittel für den Faltenbalg mit dem Schlitten und/oder mit der Längsseite der Kabine sind bevorzugt durch eine Fernbetätigung auslösbar.

Ein Ausführungsbeispiel ist in der Zeichnung dargestellt und wird im folgenden beschrieben. Es zeigen:
- Fig. 1: eine Maschinenkabine mit teilweise entfaltetem Faltenbalg
- Fig. 2: eine Maschinenkabine mit zusammengefaltetem Faltenbalg
- Fig. 3: eine Maschinenkabine mit in die Mitte geschobenen Faltenbalg
- Fig. 4: eine Maschinenkabine mit zusammengefaltetem Faltenbalg
- Fig. 5: eine dreidimensionale Ansicht des Faltenbalges
- Fig. 6: eine Draufsicht des Faltenbalges

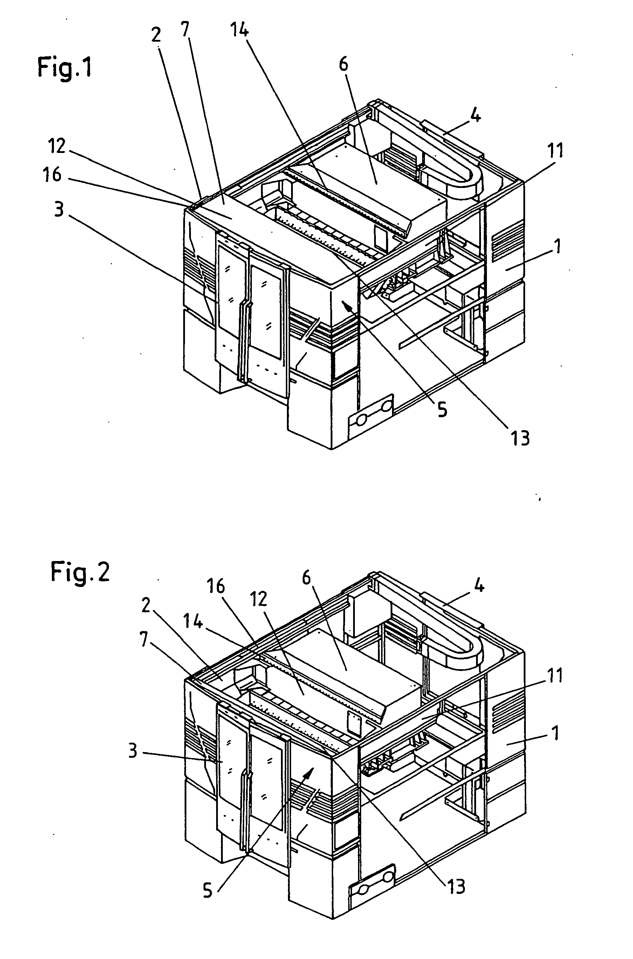

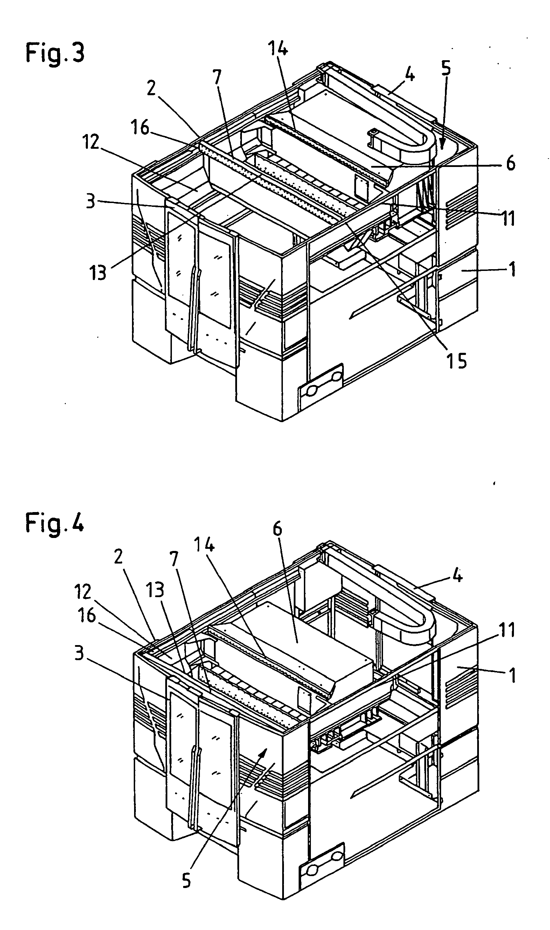

In den Figuren 1 bis 4 ist eine Kabine 5 einer Werkzeugmaschine gezeigt. Die Kabine 5 ist quaderförmig gestaltet mit den Seitenwänden 1 und 2 und der vordere und rückseitigen Wand mit den Türen 3 und 4. Ein Schlitten 6 ist auf seitlichen Schienen 11 geführt. Der Schlitten 6 dient zur Aufnahme eines in der Zeichnung nicht dargestellten Spindelkopfes mit Werkzeug für die Bearbeitung eines Werkstückes, welches ebenfalls nicht in der Zeichnung gezeigt ist. Die Dachfläche 12 der Kabine 5 ist in Figur 1 mittels eine Faltenbalges 7 im vorderen Bereich teilweise abgedeckt. Der Faltenbalg 7 kann an seiner Längsseite 13 mit der vorderen Längsseite 14 des Schlittens 6 durch Verbindungsmittel 10 verbunden werden, beispielsweise elektromagnetisch, durch Klinken etc. Die Magnete oder die Klinken sind von einer nicht dargestellten Konsole bedienbar. Im eingeklinkten Zustand ist der Faltenbalg 7 zusammenfaltbar und transportierbar wie es die Figuren 2 bis 4 zeigen. In Figur 2 ist der Faltenbalg 7 zusammengefaltet und befindet sich am oberen Rand der Türseite 3 der Kabine 5. In Figur 3 wurde der Faltenbalg 7 in den mittleren Bereich der Dachfläche transportiert, wobei der Faltenbalg 7 auf den Schienen 16 geführt ist. Bei geöffneter holmenfreier Tür 3 wird somit ein grosser Freiraum zur Be- und Entladung von Teilen gebildet. In Figur 4 ist nochmals der Zustand des zusammengefalteten Faltenbalges 7 an der Türseite 3 der Kabine 5 zu sehen.

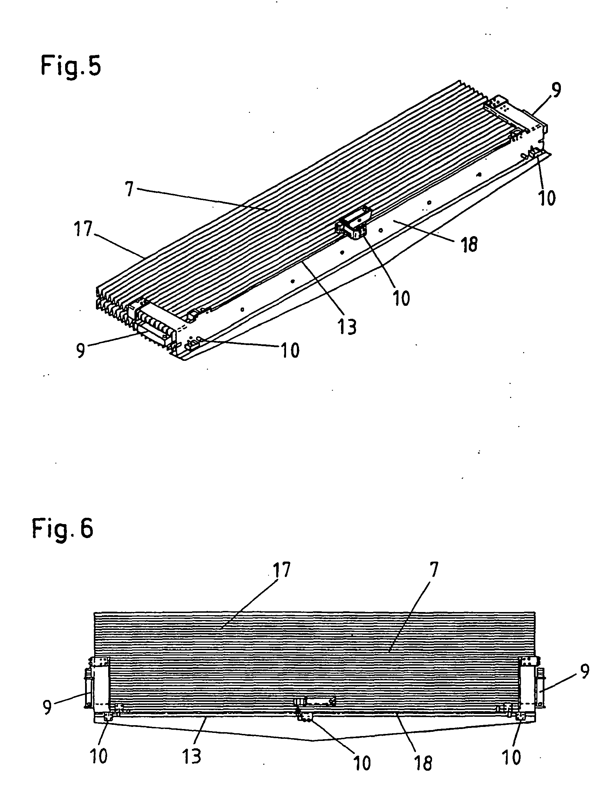

In den Figuren 5 und 6 ist der Faltenbalg 7 dargestellt. Der eigentliche faltbare Balg 17 ist mittels einer Traverse 18 eingefasst. In der Mitte und an den Seiten der Traverse 18 sind Verbindungsmittel 10 vorgesehen. Diese Verbindungsmittel 10 können elektromagnetische Einrichtungen oder mechanische Einrichtungen sein, beispielsweise Klinken. Diese Verbindungsmittel 10 sind von einem Bedienpult an oder ausserhalb der Maschine bedienbar. Weiterhin sind an den Seitenflächen des Faltenbalges 7 Führungselemente 9 zur Führung des Faltenbalges 7 in den Schienen 16 der Kabine 5 vorgesehen.

Die mit der Erfindung verbundenen Vorteile bestehen insbesondere darin, dass der ohne separaten Antrieb betätigbare Faltenbalg einen grossen Freiraum zur Be- und Entladung des Bearbeitungsraumes ermöglicht. Besonders vorteilhaft ist die erfindungsgemässe Abdeckung dafür, dass der Maschinenraum für die Beladung schwerer und voluminöser Teile mittels Kran geeignet ist

### Bezugszeichenliste

- 1: Seitenwand
- 2: Seitenwand
- 3: Tür
- 4: Tür
- 5: Kabine
- 6: Schlitten
- 7: Faltenbalg
- 8: Nicht vorhanden
- 9: Führungselemente
- 10: Verbindungsmittel
- 11: Schienen von 6
- 12: Dachfläche
- 13: Längsseite von 7
- 14: Längsseite von 6
- 16: Schienen von 7
- 17: Balg
- 18: Traverse

## Patentansprüche

1. Werkzeugmaschine mit einer mit Seitenwänden (1, 2) und Türen (3, 4) versehenen Kabine (5), einem Schlitten (6) zur Aufnahme eines Spindelstocks, in dem Werkzeuge eingespannt sind und mit einem als Dachabdeckung dienenden Faltenbalg (7), wobei der Faltenbalg (7) mittels des Schlittens (6) parallel zur Längsseite (14) des Schlittens (6) und senkrecht zu den Seitenwänden (1, 2) entfaltbar bzw.zusammenfaltbar ist, **dadurch gekennzeichnet, dass** der Faltenbalg lösbar mit der Kabine (5) ist und mittels des Schlittens in Richtung der Schlittenbewegung transportierbar ist.

2. Werkzeugmaschine nach Anspruch 1, **dadurch gekennzeichnet, dass** der Faltenbalg (7) lösbar mit der Längsseite (13) zum Schlitten (6) und/oder zur Kabine (5) verbindbar ist.

3. Werkzeugmaschine nach den Ansprüchen 1 oder 2, **dadurch gekennzeichnet, dass** der Faltenbalg (7) mittels Führungselementen (9) am Faltenbalg (7) und an den Seitenwänden (1, 2) verschiebbar ist.

4. Werkzeugmaschine nach den Ansprüchen 1, 2 oder 3, **dadurch gekennzeichnet, dass** der Faltenbalg (7) und/oder der Schlitten (6) zusammen wirkende Verbindungsmittel (10) aufweist.

5. Werkzeugmaschine nach einem der vorherigen Ansprüche, **dadurch gekennzeichnet, dass** die Verbindung des Faltbalges (7) mit dem Schlitten (6) durch eine Fernbetätigung auslösbar ist.

## Claims

1. Machine tool comprising a cabin (5) provided with side walls (1, 2) and doors (3, 4), a slide (6) for the reception of a spindle head in which tools are clamped, and with a concertina (7) serving as a roof cover, the concertina (7), by means of the slide (6), being able to be unfolded or folded up parallel to the longitudinal side (14) of the slide (6) and perpendicular to the side walls (1, 2), **characterized in that** the concertina is **detachable to** the cabin (5) and can be transported by means of the slide in the direction of the slide movement.

2. Machine tool according to Claim 1, **characterized in that** the concertina (7) can be detachably connected by the longitudinal side (13) to the slide (6) and/or to the cabin (5).

3. Machine tool according to Claims 1 or 2, **characterized in that** the concertina (7) is displaceable by means of guide elements (9) on the concertina (7) and on the side walls (1, 2).

4. Machine tool according to Claims 1, 2 or 3, **characterized in that** the concertina (7) and/or the slide (6) have interacting connecting means (10).

5. Machine tool according to one of the previous claims, **characterized in that** the connection of the concertina (7) to the slide (6) can be activated by a remote control.

## Revendications

1. Machine-outil avec une cabine (5) dotée de parois latérales (1, 2) et de portes (3, 4), un chariot (6) pour réceptionner une poupée porte-broche, dans laquelle sont serrés des outils et avec un soufflet de protection (7) servant de couverture supérieure, le soufflet de protection (7) étant déployable, respectivement repliable au moyen du chariot (6) à la parallèle du côté longitudinal (14) du chariot (6) et à la perpendiculaire des parois latérales (1, 2), **caractérisée en ce que** le soufflet de protection est détachable de la cabine (5) et transportable au moyen du chariot en direction du déplacement du chariot.

2. Machine-outil selon la revendication 1, **caractérisée en ce que** le soufflet de protection (7) est susceptible d'être relié de façon amovible par son côté longitudinal (13) avec le chariot (6) et/ou avec la cabine (5).

3. Machine-outil selon les revendications 1 ou 2, **caractérisée en ce que** le soufflet de protection (7) est déplaçable au moyen d'éléments de guidage (9) sur le soufflet de protection (7) et sur les parois latérales (1, 2).

4. Machine-outil selon les revendications 1, 2 ou 3, **caractérisée en ce que** le soufflet de protection (7) et/ou le chariot (6) comportent des moyens de liaison (10) coopérant.

5. Machine-outil selon l'une quelconque des revendications précédentes, **caractérisée en ce que** la liaison du soufflet de protection (7) avec le chariot (6) est déclenchable au moyen d'une télécommande.
